# EUROPÄISCHE PATENTSCHRIFT

(11) **EP 0 507 084 B1**
(45) Veröffentlichungstag und Bekanntmachung des Hinweises auf die Patenterteilung: **24.05.1995**
(21) Anmeldenummer: 92103432.8
(22) Anmeldetag: 28.02.1992
(51) Int. Cl.: F16H 37/08, F16H 57/02, G05G 13/00, H01H 3/40

(54) **Schalteinrichtung, insbesondere zum Steuern von zwei voneinander abhängigen Bewegungsvorgängen**
Switching device for the control of two depending movements
Dispositif de commutation pour la commande de deux mouvements dépendants

(30) Priorität: 04.04.1991 DE 4110862
(43) Veröffentlichungstag der Anmeldung: 07.10.1992
(73) Patentinhaber: Stromag Aktiengesellschaft, 59425 Unna (DE)
(72) Erfinder: Dieterich, Günter, Ing.grad., D-4708 Kamen (DE); Wientke, Friedrich,, D-4708 Kamen (DE)
(74) Vertreter: Wilhelm & Dauster Patentanwälte European Patent Attorneys

(56) Entgegenhaltungen:
- EP-A- 0 355 731
- WO-A-88/05009
- US-A- 4 825 727
- SOVIET INVENTIONS ILLUSTRATED Section PQ, Week 8634, 5. September 1986 Derwent Publications Ltd., London, GB; Class Q13, AN 86-224066/34 & SU-A-1 2040 413 (AS BELO MACHINE) 15. Januar 1986

## Beschreibung

Die Erfindung betrifft eine Schalteinrichtung, insbesondere zum Steuern von zwei voneinander abhängigen Bewegungsvorgängen, mit mindestens zwei Schaltern, die jeweils mit einer Schaltwelle versehen sind, deren Drehbewegung die Betätigung mindestens einer Schaltvorgänge auslösenden Nockenscheibe bewirkt, und mit einem den Schaltern vorgeschalteten Getriebe, das mindestens zwei Antriebswellen besitzt, deren Drehbewegung über jeweils ein Getriebeteil an mit den Schaltwellen verbundene Abtriebe übertragbar ist, wobei den Getriebeteilen eine abhängig von der Drehrichtung der Antriebswellen betätigbare Verstelleinrichtung zugeordnet ist.

Bei einer derartigen bekannten Schalteinrichtung Katalog "Endschalter" Druckschrift D 140 04.86 der Maschinenfabrik Stromag GmbH, Unna (DE) sind zwei Schalter vorgesehen, die jeweils als Endschalter ausgebildet sind. Jeder Endschalter besitzt ein Gehäuse, in dem die Schaltwelle drehbeweglich gelagert ist. Die Schaltwelle des Endschalters treibt Nockenscheiben an, die bei ihrer Drehung Schaltelemente betätigen. Den Endschaltern der bekannten Schalteinrichtung ist ein Getriebe vorgeschaltet, das aus zwei Getriebeteilen besteht, die jeweils als Stirnrad-Differentialgetriebe ausgebildet sind. Jedes Getriebeteil besitzt eine Antriebswelle und einen Abtrieb, der mit der Schaltwelle des zugeordneten Endschalters verbunden ist. Die Getriebeteile der bekannten Schalteinrichtung sind über ein Verschieberritzel miteinander verbunden, mit dem die Schalteinrichtung auf gleich- oder gegenläufige Antriebswellen einstellbar ist.

Aus der DE-C 38 28 508 ist ein Endschalter bekannt, der mit mehreren hintereinanderliegend angeordneten Nockenstufen ausgebildet ist. Die Nockenstufen besitzen jeweils einen am Gehäuse des Endschalters festlegbaren Hohlradkranz, der eine Innenverzahnung aufweist. Weiterhin besitzt jede Nockenstufe einen drehbeweglich angeordneten Planetenträger, an dem mindestens ein Planet drehbeweglich gehalten ist, der einerseits mit der Innenverzahnung des Hohlradkranzes und andererseits mit einem auf der Schaltwelle angeordneten Kupplungszahnrad kämmt. Somit führt die Drehbewegung der Schaltwelle zu einer Drehung der Nockenscheibe, die hierbei mit Schaltvorgängen auslösenden Schaltelementen in Kontakt kommt. Den Nockenstufen des Endschalters ist ein Planetengetriebe vorgeschaltet, das die Antriebsdrehzahl untersetzt.

Der Erfindung liegt die Aufgabe zugrunde, bei einer Schalteinrichtung der eingangs genannten Art, den Herstellungsaufwand und damit die Herstellungskosten zu verringern.

Zur Lösung dieser Aufgabe wird vorgeschlagen, daß die Schalter jeweils mindestens mit einer Nockenstufe ausgebildet sind, die jeweils aus einem festlegbaren Hohlradkranz mit einer Innenverzahnung, einem drehbeweglich angeordneten Planetenträger, an dem mindestens ein Planet drehbeweglich gehalten ist, der einerseits mit der Innenverzahnung des Hohlradkranzes und andererseits mit einem auf der Schaltwelle drehfest angeordneten Kupplungszahnrad kämmt, und der Nockenscheibe besteht, die drehfest mit dem Planetenträger verbunden ist, und wobei die Schaltwellen der Schalter den Abtrieben der als Planetengetriebe ausgebildeten Getriebeteilen zugeordnet sind, die im wesentlichen aus Hohlrädern, Planetenträgern und Planeten bestehen, die den in den Nockenstufen der Schalter verwendeten Teilen entsprechen.

Die beiden in der neuen Schalteinrichtung zum Einsatz kommenden Schalter, die prinzipiell aus der DE-C 38 28 508 bekannt sind, besitzen mehrere Nockenstufen, deren Teile erfindungsgemäß zum Aufbau des den Schaltern vorgeschalteten Planetengetriebes verwendet wird. Insbesondere kommen in dem Planetengetriebe die in den Nockenstufen verwendeten Hohlräder, Planetenträger und Planeten zum Einsatz. Durch diese Maßnahmen kann der Fertigungsaufwand reduziert werden, da die Anzahl der für die Schalteinrichtung benötigten Einzelteile verringert werden kann. Die in den Nockenstufen der Schalter zum Einsatz kommenden Teile können in den Getriebeteilen des Planetengetriebes zur Untersetzung der an den Antriebswellen eingetragenen Drehbewegung verwendet werden.

Vorteilhafte Weiterbildungen der Erfindung sind in den Unteransprüchen aufgeführt.

Bei einer vorteilhaften Ausgestaltung der Erfindung ist vorgesehen, daß die in den Nockenstufen der Schalter und in den Getriebeteilen des Planetengetriebes verwendeten Teile im wesentlichen aus Kunststoff hergestellt sind. Da bei der erfindungsgemäßen Ausgestaltung der Schalter an den Nockenstufen nur geringe Drehmomente auftreten, ist die Verwendung von aus Kunststoff hergestellten Zahnrädern möglich. Die in den Nockenstufen zum Einsatz kommenden Teile können ebenfalls in den Getriebeteilen des Planetengetriebes verwendet werden. Durch die Verwendung von aus Kunststoff hergestellten Zahnrädern wird ein im wesentlichen wartungsfreier Betrieb möglich, da keine Schmierung erforderlich ist. Außerdem fallen keine Korrosionsprobleme an. Des weiteren sind die aus Kunststoff hergestellten Teile gegenüber den bei den bekannten Schalteinrichtungen zum Einsatz kommenden Messingzahnrädern infolge der verringerten Materialkosten wesentlich kostengünstiger herstellbar.

Bei einer anderen Weiterbildung ist vorgesehen, daß die Getriebeteile des Planetengetriebes jeweils ein mit der Antriebswelle gekoppeltes Hohlrad mit Innenverzahnung aufweisen, das ein auf der Schaltwelle der Schalter aufsitzendes Sonnenrad antreibt, an dem mindestens ein Planet kämmt, der einen mit einer Innen- und Außenverzahnung versehenen Hohlradkranz antreibt, der mit dem jeweils anderen Getriebeteil verbindbar ist. Ein derartig aufgebautes Differentialgetriebe hat eine konstante Ober- bzw. Untersetzung und braucht bei der Drehzahlanpassung nicht geändert zu werden. Die Anpassung kann an den Schaltern der Schalteinrichtung selbst erfolgen.

Es kann weiterhin vorgesehen sein, daß der Hohlradkranz jedes Getriebeteiles mit der Verstelleinrichtung koppelbar ist, die aus zwischen den Getriebeteilen drehbeweglich angeordneten Umsteckrädern besteht, deren Zuordnung verstellbar ist. Mit einer derartigen Verstelleinrichtung läßt sich die Schalteinrichtung auf gleich- oder gegenläufige Antriebsrichtungen der Antriebswellen einstellen.

Die den einzelnen Anwendungsfällen entsprechenden nutzbaren Umdrehungen können durch die Getriebe-Ausführungen in den beiden Schaltern erzeugt werden. Hierbei kann vorgesehen sein, daß die Schalter verschiedene Übersetzungen aufweisen.

Weitere Merkmale der Erfindung ergeben sich aus einer in der Zeichnung dargestellten vorteilhaften Ausführungsform, die nachfolgend beschrieben wird. Es zeigen:
- Fig. 1: einen schematischen Längsschnitt durch eine erfindungsgemäße Schalteinrichtung mit zwei Endschaltern,
- Fig. 2: eine schematische Frontansicht in Richtung des Pfeiles II gemäß Fig. 1,

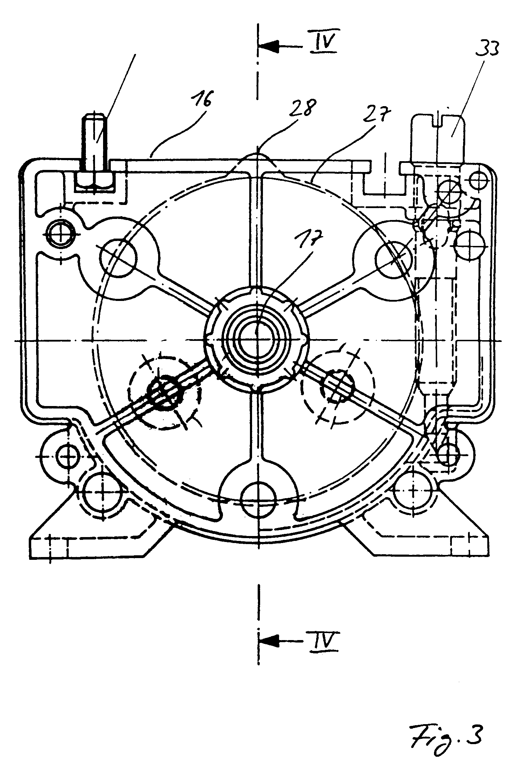

- Fig. 3: eine schematische Frontansicht eines Endschalters gemäß Fig. 1,
- Fig. 4: den Schnitt längs der Linie IV-IV gemäß Fig. 3,
- Fig. 5: eine Prinzipskizze des Planetengetriebes gemäß Fig. 1,
- Fig. 6: eine vergrößerte Darstellung des Planetengetriebes gemäß Fig. 1 und
- Fig. 7a und 7b: eine schematische Darstellung der Verstelleinrichtung des Planetengetriebes gemäß Fig. 1.

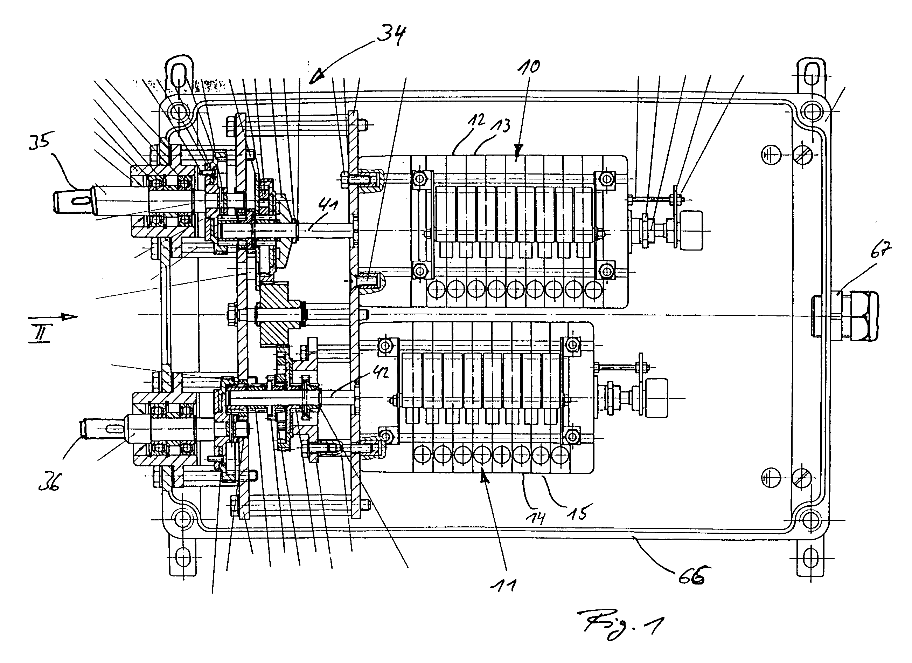

Die in Fig. 1 dargestellte Schalteinrichtung ist eine Differential-Grenzschalteinrichtung, die überall dort eingesetzt werden kann, wo zwei voneinander abhängige Bewegungen steuerstrommäßig begrenzt werden sollen. Durch den Einbau einer derartigen Grenzschalteinrichtung entfallen jegliche Einzel-Grenzschalter, zum Beispiel in einer kupplungslosen Zweimotorenwinde für Greiferbetrieb und für Gleichlaufüberwachung.

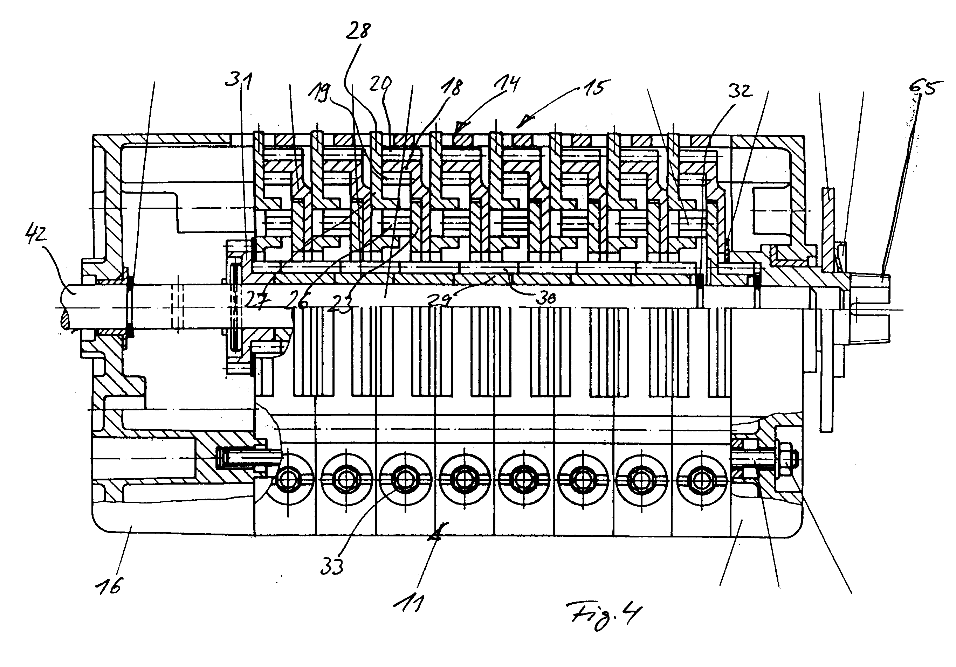

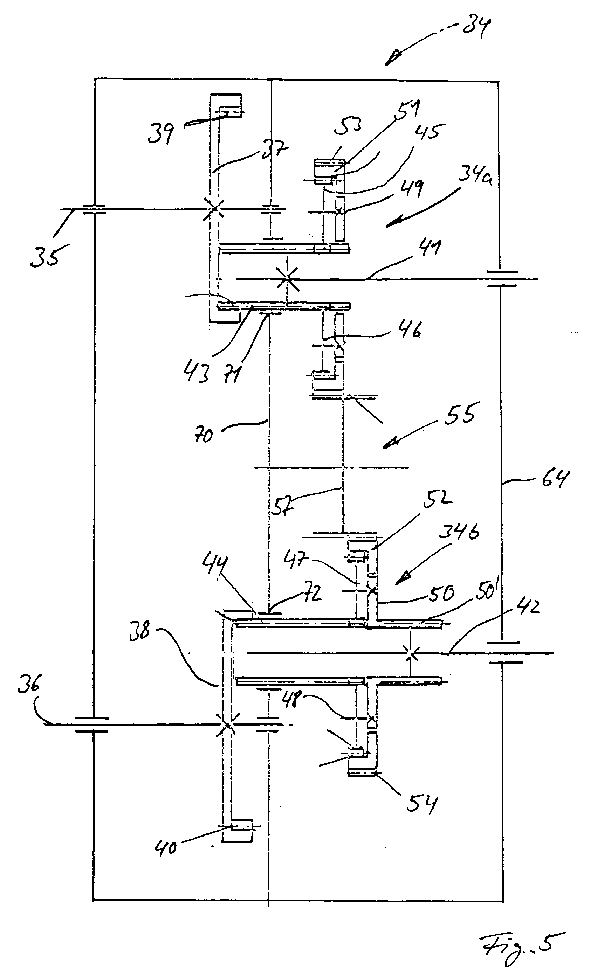

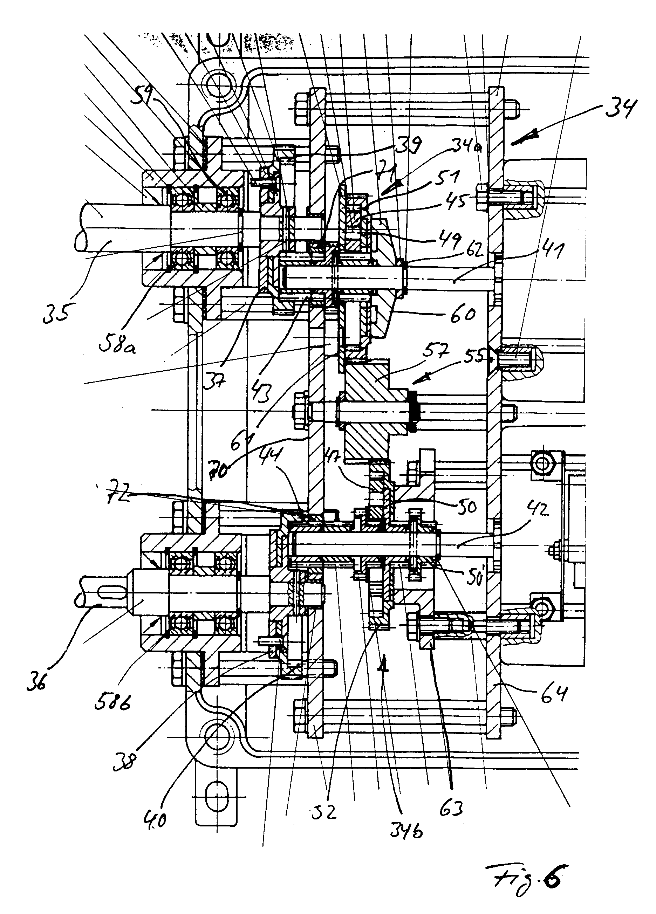

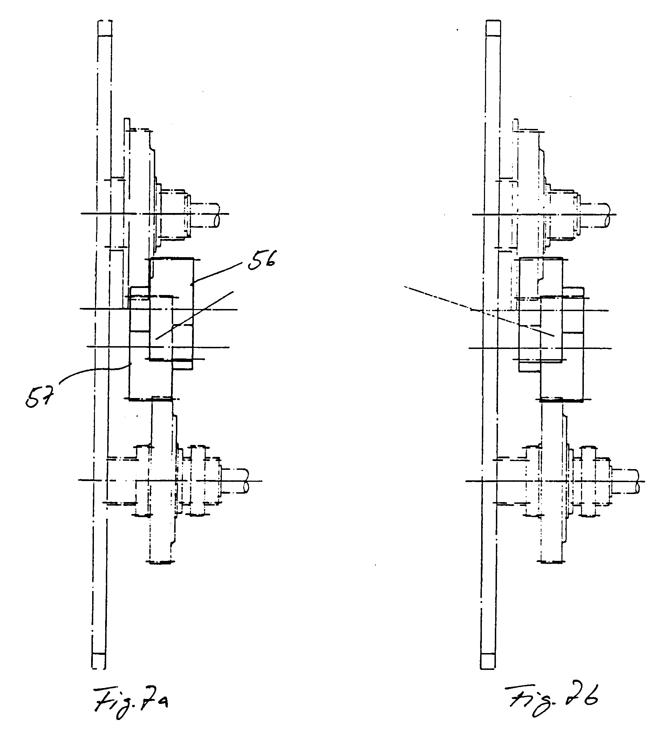

Die bei der dargestellten Schalteinrichtung zum Einsatz kommenden Endschalter (10, 11) sind prinzipiell aus der DE-C 38 28 508 bekannt. Die beiden Endschalter (10, 11) unterscheiden sich im wesentlichen durch die Anzahl ihrer hintereinanderliegend angeordneten Nockenstufen (12, 13, 14, 15). Ihr prinzipieller Aufbau geht insbesondere aus Fig. 4 hervor, die den Endschalter (11) in einer vergrößerten Darstellung zeigt. Der Endschalter (11) besitzt ein Gehäuse (16), in dem eine Schaltwelle (42) drehbeweglich gelagert ist, und mehrere in seiner Axialrichtung hintereinanderliegend angeordnete Nockenstufen (14, 15), die jeweils gleichartig aufgebaut sind. Jede Nockenstufe (14, 15) besteht im wesentlichen aus einem am Gehäuse (16) festlegbaren Hohlradkranz (18), der eine Innenverzahnung (19) und eine Außenverzahnung (20) aufweist. An der Außenverzahnung (20) ist jeder Hohlradkranz (18) an dem Gehäuse (16) des Endschalters (11) mittels einer Verstellschnecke (33) festgelegt. An der Innenverzahnung (19) des Hohlradkranzes (18) kämmen Planeten, wobei jede Nockenstufe drei Planeten besitzt. Die Lagerung der Planeten erfolgt an einem Planetenträger (23), der drehbeweglich gegenüber dem Hohlrad (18) angeordnet ist. Jeder Planet sitzt hierbei gleitbeweglich auf einem an dem Planetenträger (23) vorgesehenen Nocken auf. Ein weiterer an dem Planetenträger (18) angeordneter Nocken (26) dient der Befestigung einer Nockenscheibe (27), die mit einem aus dem Gehäuse (16) des Endschalters (11) ragenden Nocken (28) versehen ist. Auf der Schaltwelle (42) sind in deren Axialrichtung mehrere Kupplungszahnräder (29) hintereinanderliegend angeordnet, wobei in die Verzahnung (30) der Kupplungszahnräder (29) die Planeten eingreifen.

Die Festlegung der Kupplungszahnräder (29) gegenüber der Schaltwelle (42) erfolgt durch Verspannung zwischen einem Rad (31) und einem Sicherungsring (32). Sowohl das Rad (31) als auch der Sicherungsring (32) sind drehfest mit der Schaltwelle (42) verbunden.

Die Drehbewegung der Schaltwelle (42) wird über das Rad (31) und die Kupplungsräder (29) auf die Planeten jeder Nockenstufe (14, 15) des Endschalters (11) übertragen. Hierbei rollen die Planeten an der feststehenden Innenverzahnung (19) des Hohlradkranzes (18) ab. Somit führt die Drehbewegung der Schaltwelle (42) zu einer untersetzten Drehbewegung des Planetenträgers (23) jeder Nockenstufe (14, 15). Die drehfest an dem Planetenträger (23) angeordnete Nockenscheibe (27) führt demgemäß bei der Drehung der Schaltwelle (42) auch eine Drehung aus. Somit kann der an der Nockenscheibe (27) angeordnete Schaltnocken (28) zur Betätigung eines Schaltvorganges verwendet werden. Die jedem Hohlradkranz (18) einer Nockenstufe (14, 15) zugeordnete Verstellschnecke (33) ermöglicht eine direkte Einstellung der Schaltnocken (28) jeder Nockenstufe (14, 15).

Den Endschaltern (10, 11) ist ein Planetengetriebe (34) vorgeschaltet, dessen Aufbau insbesondere aus den Fig. 5 und 6 hervorgeht. Hierbei zeigt Fig. 5 eine Prinzipdarstellung des Planetengetriebes gemäß Fig. 6. Das Planetengetriebe (34) baut sich aus zwei prinzipiell ähnlich gestalteten Getriebeteilen (34a, 34b) auf. Jedes Getriebeteil (34a, 34b) besitzt eine Antriebswelle (35, 36), die in Rillenkugellagern (58a, 58b) gelagert ist und mit einem nicht näher dargestellten Antrieb verbindbar ist. Auf den Antriebswellen (35, 36) ist ein Hohlrad (37, 38) drehfest angeordnet, das mit einer Innenverzahnung (39, 40) versehen ist. Parallel zu den Antriebswellen (35, 36) sind die Schaltwellen (41, 42) der Endschalter (10, 11) in das Planetengetriebe (34) eingeführt. Auf den Schaltwellen (41, 42) ist drehbar ein Sonnenrad (43, 44) befestigt, dessen Verzahnung mit der Innenverzahnung (39, 40) der Hohlräder (37, 38) kämmt. An der Zwischenwand (70) sind Lagerbuchsen (71, 72) vorgesehen, an denen die Sonnenräder (43, 44) gelagert sind. In die Außenverzahnung des Sonnenrades (43, 44) greifen Planeten (45, 46 und 47, 48) ein, die an Planetenträgern (49, 50) drehbeweglich angeordnet sind. An ihrem Außenumfang greifen die Planeten (45, 46 und 47, 48) in die Innenverzahnung von Hohlradkränzen (51, 52) ein. Die Hohlradkränze (51, 52) besitzen jeweils eine Außenverzahnung (53, 54).

Die Planetenträger (49, 50) der Getriebeteile (34a, 34b) sind verschiedenartig ausgeführt. Der Planetenträger (49) des Getriebeteiles (34a) ist mechanisch über eine Drehmomentenstütze festgesetzt. Wie aus Fig. 6 hervorgeht, ist ein Stützring (60) vorgesehen, der an der Abtriebswelle (41) mittels eines Sicherungsringes (62) befestigt ist. Der Stützring (60) hält das Hohlrad (51), so daß dieses angetrieben von den Planeten (45, 46) eine Drehbewegung ausführen kann.

Im Bereich des Getriebeteiles (34b) ist der Planetenträger (50) mit einem nach hinten verlängerten Bereich (50') ausgebildet. In diesen Bereich (50') erfolgt die drehfeste Festlegung des Planetenträgers (50) an der Abtriebswelle (42). Das den Planetenträger (50) aufnehmende Hohlrad (52) ist drehbeweglich zwischen den Planetenträger (50) und einem Stützring (63) gehalten, der an der Getriebewand (64) befestigt ist.

Zwischen den Getriebeteilen (34a, 34b) des Planetengetriebes (34) ist eine Verstelleinrichtung (55) vorgesehen, mit der eine Anpassung an die Drehrichtung der Antriebswellen (35, 36) durchführbar ist. Die Verstelleinrichtung (55) besteht, wie insbesondere aus den Fig. 7a und 7b hervorgeht, im wesentlichen aus zwei Umsteckrädern (56, 57). Die jeweils mit einer Verzahnung versehenen Umsteckräder (56, 57) sind drehbeweglich in dem Planetengetriebe (34) gelagert. Die Verzahnung der Umsteckräder (56, 57) kämmt mit der Außenverzahnung (53, 54) der Hohlräder (51, 52). Durch Umstecken gemäß den Fig. 7a und 7b kann eine Anpassung an die Drehrichtung der Antriebswellen (35, 36) vorgenommen werden.

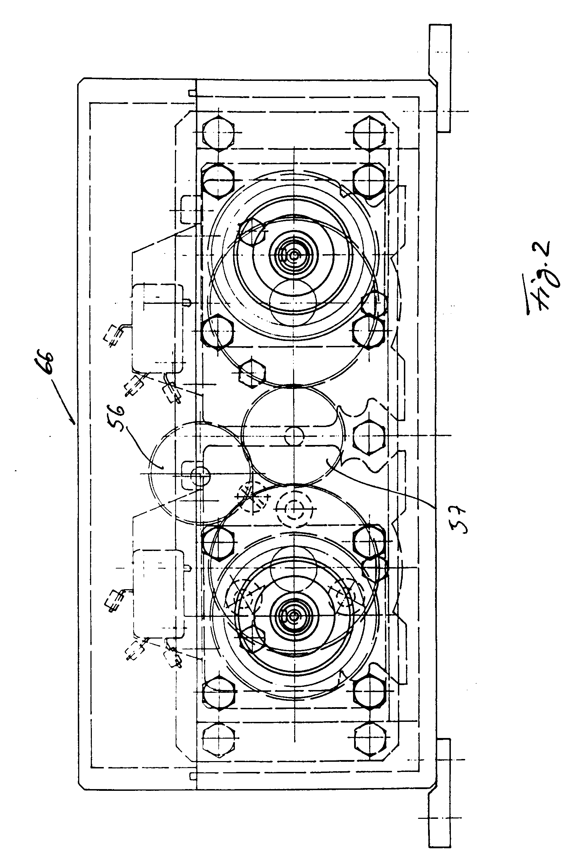

Nachfolgend soll die Funktionsweise des Planetengetriebes (34) beschrieben werden. Die beiden Antriebswellen (35, 36) treiben über die Hohlräder (37, 38) die Sonnenräder (43, 44) an. Die mit den Sonnenrädern (43, 44) kämmenden Planeten (45, 46 und 47, 48), die an den feststehenden Planetenträgern (49, 50) gehalten sind, übertragen das Drehmoment auf die Hohlräder (51, 52). Im Bereich des Getriebeteiles (34a) überträgt das Sonnenrad (43) seine eingetragene Drehbewegung auf die Schaltwelle (41). Die Hohlräder (51, 52) beider Wellen sind über die Umsteckräder (56, 57) für die Drehrichtungsanpassung miteinander verbunden (Fig. 2). Somit gibt der Planetenträger (50) des Getriebeteiles (34b) die Differenzdrehzahl der beiden Antriebswellen (35, 36) an die Schaltwelle (42) weiter.

Wie aus einer Gegenüberstellung der Fig. 4 und 6 hervorgeht, können in den Getriebeteilen (34a, 34b) des Planetengetriebes (34) die in den Nockenstufen (14, 15) der Endschalter (10, 11) zum Einsatz kommenden Teile im wesentlichen verwendet werden.

Insbesondere können die in den Nockenstufen (14, 15) eingesetzten Hohlräder (18), Planetenträger (23) und Planeten eingesetzt werden. Da die auftretenden Drehmomente niedrig sind, können diese Teile aus Kunststoff hergestellt sein. Weiterhin treten an den aus Kunststoff hergestellten Teilen keine Korrosionsprobleme auf. Darüber hinaus ist ein wartungsfreier Betrieb möglich, da die Kunststoffteile keine Schmierung benötigen. Durch den Wegfall der Schmierung wird weiterhin erreicht, daß die dargestellte Schalteinrichtung in jeder beliebigen Lage einbaubar ist.

Die Endschalter (10, 11) und das Planetengetriebe (34) werden in einem aus Aluminium hergestellten Gehäuse (66) aufgenommen. Das Gehäuse (66) weist hierbei eine hohe Gehäuse-Schutzart auf. Auf der den Antriebswellen (35, 36) gegenüberliegenden Seiten des Gehäuses (66) ist eine Kabeleinführung (67) vorgesehen, durch die nicht dargestellte Kabel den Endschaltern (10, 11) zugeführt werden.

Insgesamt weist der in der Zeichnung dargestellte Endschalter eine sehr kompakte Bauweise auf, wobei insbesondere die niedrige Bauhöhe zu nennen ist.

## Patentansprüche

1. Schalteinrichtung, insbesondere zum Steuern von zwei voneinander abhängigen Bewegungsvorgängen, mit mindestens zwei Schaltern, die jeweils mit einer Schaltwelle (41, 42) versehen sind, deren Drehbewegung die Betätigung mindestens einer Schaltvorgänge auslösenden Nockenscheibe (27) bewirkt, und mit einem den Schaltern vorgeschalteten Getriebe, das mindestens zwei Antriebswellen (35, 36) besitzt, deren Drehbewegung über jeweils ein Getriebeteil an mit den Schaltwellen verbundene Abtriebe übertragbar ist, wobei den Getriebeteilen eine abhängig von der Drehrichtung der Antriebswellen betätigbare Verstelleinrichtung (55) zugeordnet ist, dadurch gekennzeichnet, daß die Schalter (10, 11) jeweils mit mindestens einer Nockenstufe (12, 13, 14, 15) ausgebildet sind, die jeweils aus einem festlegbaren Hohlradkranz (18) mit einer Innenverzahnung (19), einem drehbeweglich angeordneten Planetenträger (23), an dem mindestens ein Planet drehbeweglich gehalten ist, der einerseits mit der Innenverzahnung (19) des Hohlradkranzes (18) und andererseits mit einem auf der Schaltwelle (42) drehfest angeordneten Kupplungszahnrad (29) kämmt, und der Nockenscheibe (27) besteht, die drehfest mit dem Planetenträger (23) verbunden ist, und wobei die Schaltwellen (41, 42) der Schalter (10, 11) den Abtrieben der als Planetengetriebe (34) ausgebildeten Getriebeteile (34a, 34b) zugeordnet sind, die im wesentlichen aus Hohlrädern (51, 52), Planetenträgern (49, 50) und Planeten (45, 46, 47, 48) bestehen, die den in den Nockenstufen (12, 13, 14, 15) der Schalter (10, 11) verwendeten Teilen entsprechen.

2. Schalteinrichtung nach Anspruch 1, dadurch gekennzeichnet, daß die in den Nockenstufen (12, 13, 14, 15) der Schalter (10, 11) und die in den Getriebeteilen (34a, 34b) des Planetengetriebes (34) verwendeten Teile im wesentlichen aus Kunststoff hergestellt sind.

3. Schalteinrichtung nach Anspruch 1 oder Anspruch 2, dadurch gekennzeichnet, daß die Getriebeteile (34a, 34b) des Planetengetriebes (34) jeweils ein mit der Antriebswelle (35, 36) gekoppeltes Hohlrad (37, 38) mit Innenverzahnung (39, 40) aufweisen, das ein auf der Schaltwelle (41, 42) der Schalter (10, 11) aufsitzendes Sonnenrad (43, 44) antreibt, an dem mindestens ein Planet (45, 47) kämmt, der einen mit einer Innen- und Außenverzahnung versehenen Hohlradkranz (51, 52) antreibt, der mit dem jeweils anderen Getriebeteil (34a, 34b) verbindbar ist.

4. Schalteinrichtung nach einem oder mehreren der vorangehenden Ansprüche, dadurch gekennzeichnet, daß der Hohlradkranz (51, 52) jedes Getriebeteils (34a, 34b) mit der Verstelleinrichtung (55) koppelbar ist, die aus zwischen den Getriebeteilen (34a, 34b) drehbeweglich angeordneten Umsteckrädern (56, 57) besteht, deren Zuordnung verstellbar ist.

## Claims

1. Switching device, especially for the control of two depending movements, having at least two switches provided each with a switching shaft (41, 42) whose rotary movement actuates at least one cam disc (27) that initiates switching operations, and having a gearing arranged upstream of the switches and comprising at least two drive shafts (35, 36) whose rotary movement can be transmitted, via respective gearing sections, to power take-offs connected with the switching shafts, the gearing sections having assigned to them adjusting means (55) that can be operated in response to the sense of rotation of the drive shafts, characterized in that each of the switches (10, 11) comprises at least one cam stage (12, 13, 14, 15), each consisting of a ring gear (18) with an internal toothing (19), a rotationally mounted pinion cage (23) carrying at least one rotationally mounted pinion that meshes, on the one hand, with the internal toothing (19) of the ring gear (18) and, on the other hand, with a coupling gear (29) fixed non-rotationally on the switching shaft (42), and the cam disc (27) which latter is non-rotationally connected with the pinion cage (23), the switching shafts (41, 42) of the switches (10, 11) being associated to the power take-offs as gear sections (34a, 34b) in the form of planetary gears (34) consisting essentially of ring gears (51, 52), pinion cages (49, 50) and pinions (45, 46, 47, 48) that correspond to the parts used in the cam stages (12, 13, 14, 15) of the switches (10, 11).

2. Switching device according to claim 1, characterized in that the parts used in the cam stages (12, 13, 14, 15) of the switches (10, 11) and those used in the gear sections (34a, 34b) of the planetary gear (34) are made substantially from a plastic material.

3. Switching device according to claim 1 or 2, characterized in that each of the gear sections (34a, 34b) of the planetary gear (34) comprises a ring gear (37, 38) with an internal toothing (39, 40), coupled with the drive shaft (35, 36) and driving a sun wheel (43, 44) seated on the switching shaft (41, 42) of the switches (10, 11), which sun wheel is engaged by at least one pinion (45, 47) which latter drives an internally and externally toothed ring gear (51, 52) that can be connected to the respective other gear section (34a, 34b).

4. Switching device according to one or more of the preceding claims, characterized in that the ring gear (51, 52) of each gear section (34a, 34b) can be coupled with the adjusting means (55), the latter consisting of change wheels (56, 57) which are rotationally mounted between the gear sections 34a, 34b and the assignment of which can be varied.

## Revendications

1. Dispositif de commutation pour la commande de deux mouvements dépendants, avec au moins deux commutateurs équipés respectivement d'un axe de commande (41, 42) dont le mouvement de rotation produit l'actionnement d'au moins un arbre à cames (27) déclenchant des processus de commutation, et avec un engrenage monté en amont des commutateurs et comprenant deux arbres moteurs (35, 36) dont le mouvement de rotation peut être transféré à travers un organe de commande sur des prises de mouvement reliées aux axes de commande, un dispositif de réglage (55) actionnable en fonction de la direction de rotation des arbres moteurs étant affectés aux organes de commande, caractérisé en ce que les commutateurs (10, 11) sont équipés respectivement d'au moins un plot de came (12, 13, 14, 15) comprenant respectivement une couronne creuse (18) à denture intérieure (19), une cage de transmission planétaire (23) à mouvement rotatoire dans laquelle est logé au moins un pignon planétaire rotatif endentant d'une part avec la denture intérieure (19) de la couronne creuse (18) et d'autre part avec une roue dentée d'accouplement (29) disposée de façon résistante à la torsion sur l'axe de commande (42) et le disque à cames (27) relié de façon résistante à la torsion avec la cage de transmission planétaire (23), les axes de commande (41, 42) des commutateurs (10, 11) étant affectés aux prises de mouvement des organes de commande (34a, 34b), conçues comme engrenage planétaire (34), qui consiste essentiellement en couronnes creuses (51, 52), en cages de transmission planétaires (49, 50) et en pignons planétaires (45, 46, 47, 48) correspondant aux organes utilisés dans les plots de came (12, 13, 14, 15) des commutateurs (10, 11).

2. Dispositif de commutation selon la revendication 1, caractérisé en ce que les pièces utilisées dans les plots de organes de commande (34a, 34b) de l'engrenage planétaire (34) sont essentiellement réalisées en matière synthétique.

3. Dispositif de commutation selon la revendication 1 ou la revendication 2, caractérisé en ce que les organes de commande (34a, 34b) de l'engrenage planétaire (34) présentent respectivement une couronne creuse (37, 38) avec denture intérieure (39, 40), accouplée à l'axe de commande (35, 36), entraînant une roue solaire (43, 44), montée sur l'axe de commande (41, 42) des commutateurs (10, 11), dans laquelle endente au moins un pignon planétaire (45, 47) entraînant une couronne creuse (51, 52) munie d'une denture intérieure et d'une denture extérieure pouvant être reliée respectivement avec l'autre organe de commande (34a, 34b).

4. Dispositif de commutation selon l'une ou plusieurs des revendications précédentes, caractérisé en ce que la couronne creuse (51, 52) de chaque organe de commande (34a, 34b) peut être accouplée au dispositif de réglage (55) comprenant des roues rapportées (56, 57) disposées de façon rotative entre les organes de commande (34a, 34b).
